# FASCICULE DE BREVET EUROPEEN

(11) **EP 3 058 706 B1**
(45) Date de publication et mention de la délivrance du brevet: **22.07.2020**
(21) Numéro de dépôt: 14796813.5
(22) Date de dépôt: 14.10.2014
(51) Int. Cl.: H04L 29/08, H04L 29/12, H04L 29/06

(54) **PROCEDE ET SYSTEME DE DECOUVERTE DYNAMIQUE DE FONCTIONS SERVICE**
VERFAHREN UND SYSTEM ZUR DYNAMISCHEN ERKENNUNG VON DIENSTFUNKTIONEN
METHOD AND SYSTEM FOR DYNAMIC DISCOVERY OF SERVICE FUNCTIONS

(30) Priorité: 18.10.2013 FR 1360210
(43) Date de publication de la demande: 24.08.2016
(73) Titulaire: ORANGE, 75015 Paris (FR)
(72) Inventeur: JACQUENET, Christian, F-35131 Pont-Pean (FR); BOUCADAIR, Mohamed, F-35830 BETTON (FR)
(86) Numéro de dépôt international: PCT/FR2014/052616
(87) Numéro de publication internationale: WO 2015/055945

(56) Documents cités:
- US-A1- 2002 194 323
- BOUCADAIR C JACQUENET FRANCE TELECOM R PARKER AFFIRMED NETWORKS D LOPEZ TELEFONICA I+D J GUICHARD C PIGNATARO CISCO SYSTEMS M ET A: "Service Function Chaining: Framework & Architecture; draft-boucadair-sfc-framework-00.txt", SERVICE FUNCTION CHAINING: FRAMEWORK & ARCHITECTURE; DRAFT-BOUCADAIR-SFC-FRAMEWORK-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 3 octobre 2013 (2013-10-03), pages 1-24, XP015092848, cité dans la demande
- GUTTMAN E ET AL: "RFC 2608 - Service Location Protocol, Version 2", INTERNET CITATION, juin 1999 (1999-06), XP002193190, Extrait de l'Internet: URL:http://www.ietf.org/rfc/rfc2608.txt [extrait le 2002-03-14]
- GHAMRI-DOUDANE S ET AL: "Hierarchical policy based management architecture to support the deployment and the discovery of services in ubiquitous networks", COMPUTATIONAL SYSTEMS BIOINFORMATICS CONFERENCE, 2004. CSB 2004. PROCE EDINGS. 2004 IEEE TAMPA, FL, USA 16-18 NOV. 2004, LOS ALAMITOS, CA, USA,IEEE (COMPUT. SOC, US, 16 November 2004 (2004-11-16), pages 126-133, XP010753066, DOI: 10.1109/LCN.2004.62 ISBN: 978-0-7695-2260-9

## Description

La présente invention concerne le domaine des télécommunications, et notamment les réseaux de communications mettant en œuvre le protocole IP (Internet Protocol). Plus particulièrement, la présente invention concerne la gestion des réseaux IP à valeur ajoutée, c'est-à-dire des réseaux capables d'effectuer des traitements différenciés selon la nature du trafic de données acheminé dans le réseau.

Ces traitements de trafic sont mis en œuvre au moyen de dispositifs appelés « fonctions service » (« *Service Functions* » en anglais), notées ci-dessous « fonction SF ». Parmi les fonctions SF couramment utilisées, on trouve, par exemple :
- des fonctions de qualité de service, telles que le marquage et la classification du trafic, ou le conditionnement et l'ordonnancement du trafic,
- des fonctions de sécurité, telles que le chiffrement du trafic, la mise en place et l'activation de filtres définis selon des listes de contrôle d'accès maintenues par certains routeurs du réseau IP, ainsi que de pare-feux IPv4 ou IPv6,
- des fonctions NAT (initiales des mots anglais « *Network Address Translation »* signifiant « Traduction d'Adresse Réseau »), telles que les fonctions NAT64 (mécanisme permettant à des clients IPv6 de communiquer avec des serveurs IPv4),
- des fonctions sonde, telles que DPI (initiales des mots anglais « *Deep Packet Inspection* » signifiant « Inspection des Paquets en Profondeur »), par exemple à des fins de contrôle parental,
- des fonctions de personnalisation ou optimisation des connexions Internet, telles que « TCP Optimizer »,
- des fonctions d'optimisation de contenu vidéo, ou encore
- des fonctions d'insertion d'informations dans les en-têtes HTTP (Hypertext Transfer Protocol).

Les fonctions SF peuvent être hébergées par des équipements de toute nature, par exemple un routeur, un serveur ou un commutateur. Par ailleurs, un même équipement peut héberger une ou plusieurs fonction(s) SF. Dans le cadre de la présente invention, on dira qu'un nœud d'un réseau IP est « associé » à une fonction SF lorsque cette fonction SF est hébergée sur ce nœud ou accessible *via* ce nœud ; de plus, un nœud associé à au moins une fonction SF sera appelé « nœud SF ».

La mise en place d'un service à valeur ajoutée bénéficiant d'une politique d'acheminement de trafic différenciée, requiert généralement la combinaison d'une pluralité de fonctions SF (pouvant par ailleurs être hébergées sur un ou plusieurs nœud(s) du réseau), le cas échéant selon un ordre caractéristique du sens du trafic (par exemple, de l'Internet vers un terminal, ou d'un terminal vers l'Internet), pour former des chaînes fonctionnelles. On appelle « chaîne de fonctions service » (« *Service Function Chain »* en anglais), désignée par SFC ci-dessous, une séquence ordonnée de fonctions SF. En d'autres termes, le chaînage de fonctions service indique la liste des fonctions SF qui doivent être sollicitées pour le traitement d'un flux de données caractéristique dudit service, ainsi que l'ordre dans lequel ces fonctions doivent être sollicitées séquentiellement pour traiter ce flux.

Par exemple, le trafic TCP (Transmission Control Protocol) émis par des clients qui ne disposent que d'une pile protocolaire IPv6 peut impliquer le chaînage d'une fonction d'optimisation TCP, d'une fonction pare-feu IPv6 et d'une fonction NAT64 pour permettre à ces clients d'accéder à un contenu IPv4 disponible sur l'Internet ; et le traitement du trafic TCP destiné à de tels clients IPv6 peut impliquer le chaînage d'une fonction pare-feu IPv4 et d'une fonction NAT64 pour permettre à ces clients de recevoir ledit contenu IPv4 disponible sur l'Internet. Un autre exemple est celui d'un service de réseau privé virtuel (RPV), qui fait appel à des fonctions d'acheminement et de routage combinées à des fonctions de qualité de service et de sécurité réparties dans différents éléments composant le réseau IP support du RPV, ou dans des éléments connectés à ce réseau support, tels qu'un pare-feu.

Un moyen d'indication explicite (par exemple un marquage véhiculé par chaque paquet appartenant à un flux donné) est alors nécessaire pour indiquer aux équipements hébergeant les fonctions SF individuelles de quelle chaîne elles font partie pour traiter le ou les flux associé(s) à cette chaîne. Chaque équipement hébergeant au moins une fonction SF individuelle faisant partie d'une SFC se réfère alors à cette indication explicite pour décider de la manière dont chaque paquet appartenant audit flux devra être traité.

Les techniques de chaînage de fonctions service sont récentes. L'état de l'art montre que les premiers développements de cette technique de chaînage de fonctions service s'appuient sur des approches monolithiques et mono-constructeurs.

Ainsi, l'article de M. Boucadair, C. Jacquenet, R. Parker, D. Lopez, J. Guichard et C. Pignataro intitulé « Differentiated Service Function Chaining Framework» (disponible à l'adresse https://tools.ietf.org/html/draft-boucadair-sfc-framework-00), décrit une procédure de création de chaîne de fonctions service. De plus, il décrit une architecture générique de chaînage de fonctions service, ainsi que les entités fonctionnelles nécessaires pour la mise en place d'une telle architecture. Cet article attribue notamment la responsabilité de la construction de SFC à des entités appelées « PDP » (initiales des mots anglais « *Policy Decision Point* » signifiant « Point de Décision de Politique »).

On rappelle à cet égard que le groupe de travail RAP (en anglais « Resource Allocation Protocol ») de l'IETF (en anglais « Internet Engineering Task Force ») a défini, dans le document RFC 2753, une architecture fonctionnelle spécifique à la gestion de réseaux mettant en œ uvre une ou plusieurs politiques (telles que des politiques d'acheminement et de routage du trafic, ou de qualité de service, ou encore de sécurité telles que le chiffrement des données transmises). Cette architecture définit en particulier des dispositifs nommés PDP, qui, dans le contexte du chaînage de fonctions service, sont responsables de la prise de décisions relatives à la structuration de chaînes de fonctions service reposant sur un ensemble de fonctions SF, et de la notification de ces décisions aux nœuds du réseau impliqués dans le déploiement et l'exploitation dudit service. En particulier, le PDP est responsable de la prise des décisions permettant de faire appliquer différentes politiques de traitements de trafic différenciés par un ou plusieurs nœuds du réseau, et qui conduisent à la configuration des fonctions *ad hoc* dans les nœuds du réseau concernés. Les dispositifs PDP peuvent être hébergés, par exemple, dans un serveur, une passerelle, ou un routeur. Dans le cadre de la présente invention, on appellera « nœud PDP » un nœud hébergeant un dispositif PDP.

Selon ledit article de Boucadair *et al.,* le PDP communique aux éléments du réseau hébergeant les fonctions SF et les fonctions de classification de flux, les instructions relatives à la mise en place de politiques de traitements de trafic différenciés, caractérisées par diverses chaînes de fonction service utilisées pour traiter l'ensemble des flux de trafic acheminés dans le réseau, en fonction de leur nature. L'article indique notamment que le PDP doit avoir connaissance de la liste des fonctions service actives dans le réseau ainsi que leur localisation ; toutefois, l'article ne spécifie pas comment le PDP pourrait acquérir cette connaissance.

Classiquement, la liste des fonctions de service SF est configurée de manière statique. La procédure de configuration consiste à enregistrer dans un fichier local au PDP l'ensemble des informations relatives aux fonctions SF (configuration complète), ou seulement une liste d'identifiants de fonctions SF (configuration partielle). En cas de configuration partielle, le PDP doit solliciter un service de résolution d'identifiants, tel qu'un service DNS (initiales des mots anglais « *Domain Name System »* signifiant « Système de Noms de Domaine », qui est un service permettant de trouver une information, par exemple une adresse IP, à partir d'un nom de domaine), pour récupérer d'autres informations utiles (par exemple, adresse(s) IPv4, ou adresse(s) IPv6).

Or ce mode de configuration classique souffre de plusieurs inconvénients.

En premier lieu, il est difficile de maintenir une base de données de service qui soit constamment à jour et en adéquation avec la dynamique des services réseau à produire. Cela est une contrainte d'autant plus forte que la liste de fonctions de service à activer pour traiter un flux de trafic donné est importante et que la combinatoire des fonctions SF composant une telle liste est souvent complexe.

Deuxièmement, le service DNS ne permet pas d'informer dynamiquement le PDP au sujet d'événements importants (de nature à affecter le processus de décision du PDP), tels que l'introduction de nouvelles fonctions SF ou de fonctions SF additionnelles à des fonctions SF existantes mais de même nature, ou la configuration d'un nouveau groupe de redondance (par exemple un groupe (« *cluster* » en anglais) de serveurs) pour une fonction de service donnée de façon à optimiser la robustesse des chaînes de fonctions de service, ou encore la capacité d'indiquer l'indisponibilité d'un fonction de service.

Troisièmement, le mode de configuration statique est par nature incompatible avec le principe de l'automatisation du processus de production de service. Le mode de configuration statique est en outre incompatible avec les pratiques opérationnelles qui consistent à dédier une équipe d'administrateurs réseau à chaque fonction SF, et à séparer les équipes en charge de la maintenance planifiée du réseau et des équipements qui le composent, de celles en charge de l'exploitation de certains segments du réseau, parce que, dans ce contexte, de telles pratiques opérationnelles sont de nature à remettre en cause la cohérence globale des opérations de gestion (configuration et exploitation des fonctions SF) à l'échelle du réseau, au risque de dégrader le niveau de qualité associé à la fourniture d'un service réseau donné.

L'article "Hierachical Policy Based Management Architecture to Support the Deployment and the Discovery of Services in Ubiquitous Netwoks" écrit par Samir Gahmri-Doudane et Nazim Agoulmine, divulgue un système de publication des ressources .

La présente invention est défini par l'objet des revendications annexes.

On notera que l'invention est compatible avec tous les types de réseaux IP (fixes ou mobiles), et avec tous les protocoles de routage dynamique(s) mis en œuvre dans de tels réseaux. On notera également qu'un nœud du réseau peut, éventuellement, héberger à la fois un dispositif PDP, et une ou plusieurs fonctions SF.

Grâce à ces dispositions, la découverte mutuelle entre les nœud(s) PDP et les nœuds SF est dynamique, car elle se déroule automatiquement au fur et à mesure des évolutions du réseau, et ce, sans nécessiter de redémarrage du réseau.

Un opérateur réseau peut alors avantageusement :
- minimiser les risques d'erreur liés à une procédure de configuration statique,
- fiabiliser et optimiser les performances d'une infrastructure mettant en œuvre la solution de chaînage de fonctions SF, en contribuant notamment à une réduction significative des temps de production d'un service réseau composé de plusieurs fonctions SF réparties dans plusieurs éléments du réseau,
- facilement mettre en place des politiques d'acheminement de trafic différenciées et à valeur ajoutée capables de prendre en compte la nature du trafic, ainsi que les fonctions service qui doivent être associées au traitement de ces différents trafics au sein d'un réseau IP,
- automatiser le processus de construction dynamique de chaînes de fonctions service mis en œuvre par un PDP, afin de structurer un service réseau reposant sur la combinatoire ordonnée d'un ensemble de fonctions service hébergées par un ou plusieurs équipements composant le réseau ou connectés au réseau,
- allouer de nouvelles ressources (par exemple, activer de nouvelles fonctions SF, ou des fonctions SF additionnelles mais de même nature que des fonctions SF déjà existantes à des fins de répartition de charge de trafic), ou au contraire supprimer certaines ressources, afin d'optimiser le traitement différencié des flux de trafic acheminés dans le réseau au moyen de chaînes de fonctions service nouvelles ou préexistantes, et
- simplifier les opérations de maintenance planifiées dans le réseau, par exemple en notifiant automatiquement un PDP d'opérations de maintenance planifiées sur un équipement et en adaptant en conséquence l'application des politiques de traitement de trafic différenciés.

Selon des caractéristiques particulières, ledit nœud PDP envoie audit nœud SF, postérieurement à ladite étape de réception d'un message d'annonce par le nœud PDP, un message destiné à mettre en place de nouvelles règles relatives au traitement d'un trafic particulier par la, ou les fonction(s) SF associées à ce nœud, et/ou à requérir des informations supplémentaires de la part du nœud SF.

Grâce à ces dispositions, la production et l'exploitation de services à valeur ajoutée sont réalisées de manière automatique et dynamique.

Selon d'autres caractéristiques particulières, ledit message d'annonce est envoyé par ledit nœud SF en réponse à un message de déclaration envoyé par le nœud PDP et indiquant que le nœud PDP agit en tant que tel.

Ainsi, dans ce mode de réalisation, le nœud PDP se déclare auprès des éléments du réseau à un rythme prédéterminé. Lorsqu'un nœud associé à au moins une fonction SF reçoit un tel message de déclaration, il envoie au nœud PDP émetteur de ce message de déclaration les informations caractéristiques de la, ou des fonction(s) SF associée(s) à ce nœud. Ce mode de réalisation a l'avantage de permettre à un nœud PDP d'être reconnu rapidement et automatiquement par les nœuds du réseau associés à une ou plusieurs fonction(s) SF dès le branchement ou l'activation du nœud PDP.

Selon des caractéristiques encore plus particulières, postérieurement à la réception par ledit nœud SF dudit message de déclaration, le nœud SF envoie audit nœud PDP un message destiné à fournir au nœud PDP des informations supplémentaires ou à lui demander des instructions.

Grâce à ces dispositions, la production et l'exploitation de services à valeur ajoutée sont réalisées de manière automatique et dynamique.

Selon encore d'autres caractéristiques particulières, suite à ladite étape de réception d'un message d'annonce, ledit nœud PDP envoie audit nœud SF un message de déclaration indiquant que le nœud PDP agit en tant que tel.

Ainsi, dans ce mode de réalisation, le nœud SF s'annonce auprès des éléments du réseau à un rythme prédéterminé ou de manière spontanée. Le ou les nœud(s) PDP récupère(nt) alors les informations caractéristiques des fonctions SF associées à ce nœud SF, soit parce qu'un dispositif PDP concerné est hébergé dans l'un des nœuds du réseau qui reçoivent de tels messages d'annonce, soit parce qu'un nœud PDP concerné est connecté à l'un des nœuds du réseau qui reçoivent de tels messages d'annonce. Ce mode de réalisation a l'avantage de permettre à un nœud SF d'être reconnu rapidement et automatiquement par le ou les nœud(s) PDP dès le branchement ou la mise à jour dudit nœud.

Selon un deuxième aspect, l'invention concerne divers dispositifs.

Elle concerne ainsi, premièrement, un nœud d'un réseau IP, dit nœud PDP, responsable de la prise de décisions relatives à la structuration d'un service reposant sur un ensemble de fonctions de service, dites fonctions SF, et de la notification de ces décisions à d'autres nœuds dudit réseau IP. Ledit nœud PDP est remarquable en ce qu'il possède des moyens pour :
- recevoir un message d'annonce envoyé par un nœud dudit réseau IP, dit nœud SF, associé à au moins une fonction SF hébergée sur ledit nœud SF ou accessible *via* ledit nœud SF, ledit message d'annonce indiquant au moins un identifiant ainsi que la localisation de ladite fonction SF associée audit nœud SF, et
- mettre à jour une liste de fonctions SF sur la base d'informations tirées dudit message d'annonce.

L'invention concerne aussi, deuxièmement, un nœud d'un réseau IP, dit nœud SF, associé à au moins une fonction de service, dite fonction SF, hébergée sur ledit nœud SF ou accessible *via* ledit nœud SF. Ledit nœud SF est remarquable en ce qu'il possède des moyens pour :
- recevoir un message de déclaration envoyé par un nœud dudit réseau IP, dit nœud PDP, responsable de la prise de décisions relatives à la structuration d'un service reposant sur un ensemble de fonctions SF, et de la notification de ces décisions à d'autres nœuds du réseau IP, ledit message de déclaration indiquant que ledit nœud PDP agit en tant que tel,
- enregistrer la localisation dudit nœud PDP, et
- envoyer en réponse au nœud PDP un message d'annonce indiquant au moins un identifiant ainsi que la localisation de ladite fonction SF associée au nœud SF.

L'invention concerne aussi, troisièmement, un nœud d'un réseau IP, dit nœud SF, associé à au moins une fonction de service, dite fonction SF, hébergée sur ledit nœud SF ou accessible *via* ledit nœud SF. Ledit nœud SF est remarquable en ce qu'il possède des moyens pour :
- envoyer un message d'annonce indiquant au moins un identifiant ainsi que la localisation de ladite fonction SF associée au nœud SF,
- recevoir en réponse de la part d'un nœud dudit réseau IP, dit nœud PDP, responsable de la prise de décisions relatives à la structuration d'un service reposant sur un ensemble de fonctions SF, et de la notification de ces décisions à d'autres nœuds du réseau IP, un message de déclaration indiquant que le nœud PDP agit en tant que tel, et
- enregistrer la localisation dudit nœud PDP.

Selon un troisième aspect, l'invention concerne un système de découverte dynamique de fonctions service dans un réseau IP. Ledit système est remarquable en ce qu'il comprend au moins un nœud PDP tel qu'exposé succinctement ci-dessus, et au moins un nœud SF tel qu'exposé succinctement ci-dessus.

Les avantages offerts par ces dispositifs et ce système sont essentiellement les mêmes que ceux offerts par le procédé de découverte dynamique de fonctions service succinctement exposé ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de découverte dynamique de fonctions service succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente schématiquement un exemple de réseau apte à mettre en œuvre l'invention,
- la figure 2 représente un identifiant de SFC dans un réseau utilisant le protocole de routage OSPF,
- la figure 3 représente un en-tête de paquet définissant une SFC dans un réseau OSPF, et
- la figure 4 représente un en-tête Type-Longueur-Valeur relatif au contenu d'une SFC dans un réseau OSPF.

Considérons un réseau IP comportant, d'une part, au moins un nœud PDP, et d'autre part des nœuds *Nᵢ,* où *i* ≥ 1.

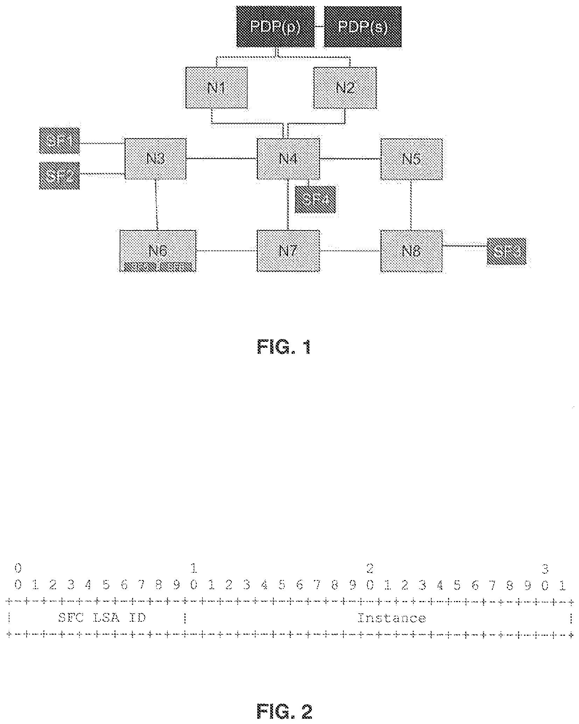

A titre d'exemple, la **figure 1** représente schématiquement un réseau IP comprenant un nœud PDP dit « primaire », noté PDP(p) sur la figure, et un nœud PDP dit « secondaire », noté PDP(s) sur la figure. En effet, il est conseillé de prévoir de manière générale dans les réseaux IP au moins un PDP secondaire en plus du PDP primaire, afin d'améliorer la robustesse et la disponibilité du dispositif PDP en cas de panne du PDP primaire, et de permettre une répartition de charge.

Le réseau de la figure 1 comprend également 8 nœuds non-PDP notés N1 à N8. Le nœud N6 héberge les fonctions SF5 et SF6. Le nœud N3 est raccordé à un réseau hébergeant les fonctions SF1 et SF2. Le nœud N4 est raccordé à un réseau hébergeant la fonction SF4. Le nœud N8 est raccordé à un domaine ou un réseau IP hébergeant la fonction SF3. Enfin, les nœuds N1, N2, N5 et N7 ne sont pas associés à une fonction SF.

Le nœud PDP (primaire ou secondaire) associe à chaque fonction SF un identifiant que nous appellerons « Service_Function_Identifier ». Cet identifiant désigne d'une manière univoque une fonction atomique (par exemple NAT, ou pare-feu). L'identifiant de la fonction service est structuré comme une chaîne de caractères. D'autres schémas d'identification de SF peuvent être adoptés au sein d'un même domaine administratif.

On notera qu'une fonction SF peut être hébergée par plusieurs équipements ; par conséquent, plusieurs adresses IP peuvent être associées au même identifiant d'une fonction SF, à des fins de localisation des différentes instances de cette fonction SF dans le réseau. Ces adresses IP peuvent être de la même famille (i.e., IPv4, IPv6, ou autre), ou de familles différentes.

Une fois ces chaînes de fonctions service structurées par le PDP, elles sont communiquées aux nœuds du réseau. Elles peuvent par exemple être communiquées sous forme de cartes descriptives des fonctions SF qui doivent être exécutées selon un certain ordre pour un certain type de trafic de données associé à ladite carte. La réception de ces cartes permet en particulier à un nœud du réseau de se positionner sur cette carte, c'est-à-dire de déterminer sa position dans la chaîne, et de solliciter, conformément aux instructions de la chaîne, les fonctions SF qui lui sont associées.

On va décrire à présent deux modes de réalisation du procédé selon l'invention.

Selon un premier mode de réalisation, dit « mode de souscription », le ou les nœud(s) PDP se déclare(nt) auprès des éléments du réseau, par exemple périodiquement, en utilisant un mode de communication point à multipoint (par exemple multicast). Une adresse multicast (PDP_MCAST_GP) est utilisée à cet effet. Le message de déclaration sera appelé ADVERT(PDP, Is_Primary). Le paramètre « Is_Primary » est par exemple positionné à « 1 » si le PDP en question est le PDP primaire, et à « 0 » si le PDP en question est un PDP secondaire. Chaque nœud PDP déclare de manière régulière sa présence et sa disponibilité à ladite adresse multicast PDP_MCAST_GP.

En cas d'indisponibilité d'un nœud PDP, un message dédié appelé WITHDRAW(PDP) est envoyé à ladite adresse multicast PDP_MCAST_GP pour informer les nœuds du réseau de cette indisponibilité.

Chaque « nœud SF » tel que défini ci-dessus (i.e., associé à au moins une fonction SF), doit s'inscrire au groupe multicast associé à l'adresse multicast PDP_MCAST_GP. Chaque nœud SF écoute donc les messages envoyés au groupe multicast (PDP_MCAST_GP).

Lorsqu'un nœud SF reçoit un message de déclaration ADVERT(PDP, Is_Primary), il enregistre (par exemple sur la base de l'adresse IP source du message de déclaration) la localisation du nœud PDP ayant émis ce message de déclaration, ainsi que, optionnellement, la valeur du paramètre Is_Primary.

Le nœud SF envoie alors à ce nœud PDP, aux fins de souscription, un message d'annonce pour lui indiquer au moins un identifiant et la localisation de la, ou les fonction(s) SF associée(s) à ce nœud SF. Ce message d'annonce est un message unicast que nous appellerons SUBSCRIBE, et qui comprend les paramètres obligatoires Service_Function_Identifier et Service_Function_Locator (IPv4, IPv6), ainsi que des paramètres optionnels.

Les paramètres obligatoires sont définis comme suit :
- Service_Function_Identifier : indique l'identifiant de la fonction service ; et
- Service_Function_Locator (IPv4, IPv6) : indique une adresse IPv4 et/ou IPv6 à utiliser pour invoquer la fonction SF.

Les paramètres optionnels peuvent être par exemple :
- Service_Function_Description : ce paramètre est utilisé pour fournir des informations descriptives de la fonction SF et de son environnement (par exemple, identité du constructeur de l'équipement hébergeant la fonction SF) ;
- Service_Function_Capacity : ce paramètre indique les capacités d'un nœud SF telles que, par exemple, le nombre maximum d'entrées NAT acceptées par une fonction NAT, et/ou la capacité des liens réseau, et/ou le nombre maximum de tunnels IP-in-IP ;
- Service_Function_Current_Load : ce paramètre renseigne la charge actuelle d'un nœud SF ; il est utilisé pour des besoins tels que le partage de charge ;
- Service_Function_Unavailability_Timer : ce paramètre indique à un nœud PDP l'instant à partir duquel une fonction SF ne sera plus disponible, par exemple en cas d'opération de maintenance planifiée sur le nœud SF associé à cette fonction SF ; le nœud PDP doit alors faire migrer le trafic de données vers un autre équipement offrant la même fonction SF, c'est-à-dire prendre la décision de modifier le contenu de la chaîne de fonctions service associée, de sorte que le traitement du trafic correspondant puisse invoquer l'ensemble des (nouvelles) fonctions SF décrites dans la chaîne, tout en minimisant la dégradation éventuelle du service réseau concerné (risque de perte de paquets par exemple) ; aucune information n'est fournie au nœud PDP quant à la remise en service de la fonction SF ; la valeur « 0 » du paramètre indique que la fonction SF est indisponible immédiatement ;
- Service_Function_Reboot_Timer : les équipes opérationnelles du réseau procèdent à des redémarrages périodiques de machines réseau, notamment dans le contexte de l'installation de versions logicielles majeures par exemple ; ce paramètre est alors utilisé pour indiquer à un nœud PDP qu'une opération de redémarrage est prévue et qu'elle risque d'affecter la disponibilité d'une ou plusieurs fonctions SF ; ces fonctions SF seront en principe disponibles immédiatement après le redémarrage ;
- Service_Function_Diagnosis : indique si un nœud SF est compatible avec un mécanisme de diagnostic.

Chaque nœud SF doit envoyer un message d'annonce SUBSCRIBE à l'ensemble des nœuds PDP primaires dont il a connaissance. Si aucun nœud PDP primaire n'est présent, le nœud SF doit envoyer le message SUBSCRIBE à un nœud PDP secondaire dont il a connaissance. De préférence, le nœud SF maintient un cache de nœuds PDP actifs, dans lequel est indiqué le rôle (primaire/secondaire) de ces nœuds PDP actifs ; en cas de réception d'un message WITHDRAW(PDP), mentionné ci-dessus, un tel nœud SF retire le nœud PDP concerné de sa liste de nœuds PDP actifs.

On notera que d'autres informations peuvent être envoyées par un nœud SF à un nœud PDP dont il a connaissance, telles qu'une table de politiques de traitement de trafic différenciés disponible localement, ou une liste des profils disponibles (par exemple, des profils caractéristiques des différentes classes de service associées au support de fonctions SF dédiées à la qualité de service).

Lorsqu'un nœud PDP reçoit un message d'annonce SUBSCRIBE envoyé par un nœud SF, le nœud PDP met à jour une liste de fonctions SF précisant leur localisation, ainsi que, optionnellement, d'autres informations telles que leurs capacités fonctionnelles (mentionnées ci-dessus) ou la charge des nœuds SF associés. Grâce à ces données, le nœud PDP pourra structurer des services réseau s'appuyant sur une combinaison ordonnée d'un ensemble de ces fonctions SF.

Optionnellement, le nœud PDP peut également contacter (en unicast) un nœud SF, par exemple pour appliquer de nouvelles règles relatives au traitement d'un trafic particulier par la, ou les fonction(s) SF associées à ce nœud, ou pour récupérer des informations supplémentaires non fournies lors de la phase de découverte.

Selon un deuxième mode de réalisation de l'invention, dit « mode d'inondation » (« *flooding »* en anglais), chaque nœud SF s'annonce, par exemple périodiquement, pour diffuser au moins un identifiant et la localisation de la, ou des fonction(s) SF associée(s) à ce nœud SF. Un groupe multicast (SF_MCAST_GP) est utilisé à cet effet. Pour ce faire, chaque nœud SF envoie un message d'annonce multicast que nous appellerons FLOOD, et qui est constitué de la même façon que le message SUBSCRIBE du « mode de souscription » décrit ci-dessus. On notera que d'autres informations peuvent être diffusées par un nœud SF, telles qu'une table de politiques de traitement de trafic différenciés disponible localement, ou une liste des profils disponibles (par exemple, des profils caractéristiques des différentes classes de service associées au support de fonctions SF dédiées à la qualité de service).

Chaque nœud PDP doit s'inscrire au groupe multicast (SF_MCAST_GP) utilisé par les nœuds SF pour annoncer leur présence. Le ou les nœud(s) PDP écoute(nt) les messages envoyés au groupe multicast (SF_MCAST_GP). Lorsqu'un nœud PDP reçoit un message d'annonce FLOOD, il enregistre les informations contenues dans ce message. Il met à jour une liste de fonctions SF précisant leur localisation, ainsi que, optionnellement, d'autres informations telles que leurs capacités fonctionnelles ou la charge des nœuds SF associés.

Optionnellement, le nœud PDP envoie au nœud SF émetteur de ce message FLOOD un message de déclaration ADVERT(PDP, Is_Primary) indiquant que le nœud PDP agit en tant que tel. Le paramètre « Is_Primary » est par exemple positionné à « 1 » si le PDP en question est le PDP primaire, et à « 0 » si le PDP en question est un PDP secondaire. A titre optionnel également, un nœud PDP peut envoyer des messages de déclaration indiquant qu'il agit en tant que nœud PDP hors réception d'un message d'annonce FLOOD (par exemple, périodiquement).

Lorsqu'un nœud SF reçoit un tel message de déclaration ADVERT(PDP, Is_Primary), il enregistre (par exemple sur la base de l'adresse IP source du message de déclaration) la localisation du nœud PDP ayant émis ce message de déclaration, ainsi que, optionnellement, la valeur du paramètre Is_Primary. Les nœuds SF peuvent découvrir de cette manière l'existence de plusieurs nœuds PDP ; de préférence, un tel nœud SF maintient un cache de nœuds PDP actifs, dans lequel est indiqué le rôle (primaire/secondaire) de ces nœuds PDP actifs.

Par ailleurs, le nœud PDP peut également contacter (en unicast et de manière spontanée) un nœud SF, par exemple pour appliquer de nouvelles règles relatives au traitement d'un trafic particulier par la, ou les fonction(s) SF associées à ce nœud, ou pour récupérer des informations supplémentaires non fournies lors de la phase de découverte/acquisition. Grâce à ces données, le nœud PDP pourra structurer des services réseau s'appuyant sur une combinaison ordonnée d'un ensemble de ces fonctions SF.

Si le paramètre Unavailability_Timer est indiqué dans le message FLOOD, le nœud PDP doit mettre à jour ses politiques de chaînage de fonctions service pour faire migrer le trafic de données qui met en œuvre la fonction SF en question vers d'autres équipements offrant la même fonction SF, c'est-à-dire prendre la décision de modifier le contenu de la chaîne de fonctions service associée, de sorte que le traitement du trafic correspondant puisse invoquer l'ensemble des (nouvelles) fonctions SF décrites dans la chaîne, tout en minimisant la dégradation éventuelle du service réseau concerné (risque de perte de paquets par exemple). La migration doit être effectuée avant l'expiration de la durée (« *timer* ») renseignée par ce paramètre.

Un nœud PDP peut recevoir plusieurs messages FLOOD ayant le même identifiant de service (Service_Function_ldentifier). Le nœud PDP peut alors appliquer une politique de partage de charge pour distribuer le trafic entre les différentes localisations d'une même fonction SF, chacune de ces localisations étant identifiée de façon univoque par le paramètre Service_Function_Locator.

Les messages d'annonce FLOOD permettent, le cas échéant, de découvrir l'existence de plusieurs « instances » d'une même fonction SF : il s'agit par exemple du cas où une même fonction SF est disponible dans au moins deux équipements distincts possédant des adresses IP distinctes, ou dans deux instances virtuelles ayant des adresses IP distinctes. Ce mécanisme de découverte peut ainsi être utilisé par les nœuds SF associés à cette fonction SF pour des besoins de partage de charge, de synchronisation d'états, et ainsi de suite. De plus, une fonction dédiée au partage de charge peut utiliser le mécanisme de découverte pour mettre en œuvre des politiques de partage de charge entre différentes instances d'une même fonction SF.

Un nœud SF peut en outre utiliser un message d'annonce FLOOD pour diffuser des informations utiles concernant la, ou les fonction(s) SF associée(s) à ce nœud SF. Par exemple, si l'une des fonctions SF associées devient indisponible, le nœud SF envoie un message d'annonce FLOOD qui sera reçu par l'ensemble des nœuds du réseau ; le PDP prendra une décision en conséquence (par exemple modification de la chaîne de fonctions service affectée), tandis qu'un autre nœud associé à une instance de cette même fonction SF pourra, le cas échéant, assurer le traitement correspondant à cette fonction SF dans l'attente de la décision prise par le PDP. Le mode d'inondation permet ainsi de minimiser les risques d'interruption de service.

La présente invention est compatible avec la majorité des protocoles de routage dynamiques couramment déployés dans les réseaux IP, par exemple IS-IS (« Intermediate System to Intermediate System »), OSPF (« Open Shortest Path First »), BGP (« Border Gateway Protocol »), ou d'autres protocoles comme SLP (« Service Location Protocol »). A titre d'exemple, on va décrire à présent l'application du mode d'inondation de l'invention aux réseaux mettant en œuvre le protocole de routage OSPF ; ces réseaux seront désignés ci-dessous par « réseaux OSPF ».

OSPF est un protocole de routage dynamique utilisé dans les réseaux IP, et qui s'appuie sur l'algorithme de Djikstra pour le calcul de routes. Le protocole OSPF est notamment décrit dans le document RFC 2328 de l'IETF (J. Moy, « OSPF Version 2 », STD 54, avril 1998).

Dans le présent exemple d'application de l'invention, un nœud PDP est connecté au réseau OSPF. Ce nœud PDP n'est pas nécessairement un routeur OSPF. De même, les fonctions SF peuvent être hébergées dans les routeurs OSPF du réseau mais peuvent également être localisées dans d'autres équipements. Naturellement, plusieurs fonctions SF peuvent être hébergées dans un même routeur OSPF.

Les routeurs d'un réseau OSPF utilisent un paquet appelé LSA (initiales des mots anglais « *Link State Advertisement* ») pour annoncer des informations diverses, telles que des routes intra- ou inter-aires OSPF. Il existe plusieurs types de paquets LSA, dont les paquets LSA Opaque.

Les paquets LSA Opaque fournissent un mécanisme générique destiné à faciliter les extensions fonctionnelles du protocole OSPF. L'information véhiculée dans les paquets LSA Opaque peut être soit directement utilisée par le protocole OSPF, par exemple pour affiner le processus de calcul de routes, soit indirectement par une application ou un système qui souhaite utiliser les ressources d'un réseau OSPF pour distribuer une information particulière à l'ensemble des routeurs qui composent ce réseau OSPF. Conformément au document RFC 5250 de l'IETF (L. Berger et al., « The OSPF Opaque LSA Option », juillet 2008), les LSA Opaque consistent en un en-tête LSA standard suivi d'un champ d'information aligné sur 32 bits, dont le contenu est caractéristique de l'information distribuée dans le réseau OSPF. Le codage de cette information est de type TLV (Type, Longueur, Valeur). Il existe trois types de LSA Opaque : les LSA de « type 9 » (type « *link-local* »), qui ne sont pas distribuées au-delà du lien local auquel est connecté le routeur OSPF qui émet le paquet LSA, les LSA de « type 10 » (type « *area-local* »), qui ne sont pas distribuées au-delà des frontières de l'aire OSPF à laquelle appartient le routeur OSPF qui émet un tel paquet, et les LSA de « type 11 » (type « AS ») qui sont distribuées à l'ensemble des routeurs OSPF qui composent le système autonome (« *Autonomous System »,* ou AS en anglais), que ce système autonome soit décomposé en plusieurs aires OSPF ou pas. L'application de la présente invention aux réseaux IP mettant en œuvre le protocole OSPF s'appuie sur l'utilisation de paquets LSA Opaque de types 10 ou 11.

On appelle SFC LSA *(Service Function Chaining* LSA) un paquet LSA Opaque de type 10 ou 11 décrivant des capacités fonctionnelles des équipements composant un réseau IP mettant en œuvre le protocole OSPF. La découverte automatique de telles capacités fonctionnelles facilite le chaînage (ordonné) desdites fonctions dans le cadre de la mise en place de politiques d'acheminement de trafic différenciées au sein d'un réseau IP.

Si le dispositif PDP n'est pas hébergé dans un routeur OSPF, alors son routeur de raccordement doit être configuré explicitement pour annoncer ce dispositif PDP au moyen d'une SFC LSA. Si le dispositif PDP est hébergé dans un routeur OSPF, alors ce routeur utilise une SFC LSA pour annoncer ce dispositif PDP.

Si une fonction SF n'est pas hébergée dans un routeur OSPF (parce qu'elle est par exemple hébergée dans un serveur connecté au réseau OSPF), alors le routeur auquel cette fonction SF est raccordée doit être configuré explicitement pour annoncer la fonction SF ou la liste de fonctions SF raccordée(s) à ce routeur. Cette annonce s'effectue en envoyant une SFC LSA. Si la fonction SF est hébergée dans un routeur OSPF, alors ce routeur utilise une SFC LSA pour annoncer la fonction ou la liste de fonctions SF hébergée(s) dans ce routeur.

La distribution des SFC LSA est conforme à la procédure décrite dans le document RFC 5250 mentionné ci-dessus, et plus précisément la Section 3.1 de ce document, en adéquation avec les types 10 et 11 auxquels la SFC LSA peut se référer. D'une manière générale, les routeurs OSPF du réseau utilisent des SFC LSA pour annoncer à l'ensemble des routeurs OSPF de l'aire ou du domaine les fonctions SF dont ils ont la connaissance, soit parce qu'ils hébergent eux-mêmes au moins une fonction SF, soit parce qu'ils sont directement connectés à au moins un nœud hébergeant au moins une fonction SF.

Des paquets OSPF contenant la SFC LSA sont envoyés :
- au moment où les routeurs sont mis en marche (phase de *« bootstrap* »), ou
- à chaque fois qu'un événement le justifie (par exemple, mise à jour logicielle d'un routeur qui suppose l'intégration de fonctions SF additionnelles), ou
- périodiquement.

Suite à la réception de ces paquets OSPF contenant une SFC LSA, chaque routeur OSPF de l'aire ou du domaine met à jour sa base de données topologiques (notamment les informations concernant l'accès IP aux fonctions SF), et informe dynamiquement le ou les nœud(s) PDP de la nature des fonctions SF dont il a ainsi acquis la connaissance, ainsi que les informations afférentes, telles que la localisation des nœuds SF ou leur charge.

La manière dont le, ou les, dispositif(s) PDP récupère(nt) ces informations dépend de leur localisation : soit le dispositif PDP est hébergé dans un routeur OSPF (auquel cas il reçoit les SFC LSA comme n'importe quel autre routeur OSPF de l'aire ou du domaine), soit il utilise les ressources d'un protocole adéquat tel que BGP-LS (« BGP Link State », cf. H. Gredler et al., « North-Bound Distribution of Link-State and TE Information using BGP », draft-idr-ls-distribution-03, mai 2013).

Si le nœud PDP n'est pas un routeur OSPF, le nœud PDP peut :
- demander périodiquement à son routeur de raccordement une liste des SF connectées au réseau OSPF ; ou
- configurer son routeur de raccordement de manière à ce que le routeur de raccordement lui transmette un message de notification pour lui communiquer la liste des fonctions SF connectées au réseau OSPF ; ce message de notification est produit par son routeur de raccordement en cas d'événement tel que la disponibilité d'une nouvelle fonction SF, la modification des informations d'une fonction SF, ou l'indisponibilité d'une fonction SF.

La diffusion des informations contenues dans une SFC LSA à l'échelle d'une aire OSPF (type 10) ou d'un domaine (type 11) contribue à l'élaboration de la cartographie des fonctions service SF disponibles et de nature à être combinées et ordonnées selon des cartes utilisées par les routeurs pour procéder au traitement des flux associés à chacune de ces cartes. L'association d'un flux à une carte donnée est le résultat d'une fonction de classification généralement assurée par les nœuds frontières du domaine, voire de l'aire OSPF (comme décrit dans l'article de Boucadair *et al.* mentionné ci-dessus).

L'acquisition de ces informations permet à un nœud PDP de construire ses décisions sur la base des cartes fonctionnelles qui seront ensuite transmises aux équipements du réseau impliqués dans le traitement des flux correspondants, c'est-à-dire des flux dont le traitement (selon une séquence ordonnée de fonctions SF) est décrit dans l'une ou l'autre de ces cartes.

Le processus de découverte automatique des capacités fonctionnelles selon l'invention s'appuie, dans le présent exemple de réalisation, sur l'utilisation d'une LSA Opaque de type 10 (« *area-scope »).*

Comme illustré sur la **figure 2****,** l'identifiant de la SFC LSA est codé sur un octet (cf. RFC 5250), suivi de trois octets qui représentent le champ Instance. Ce champ Instance est une valeur arbitraire qui est utilisée pour la maintenance de plusieurs SFC LSA, jusqu'à un maximum théorique de 16777216 SFC LSA qui pourront être produites par un seul routeur OSPF. L'identifiant de la SFC LSA est attribué par la structure de gouvernance IANA (« Internet Assigned Numbers Authority »).

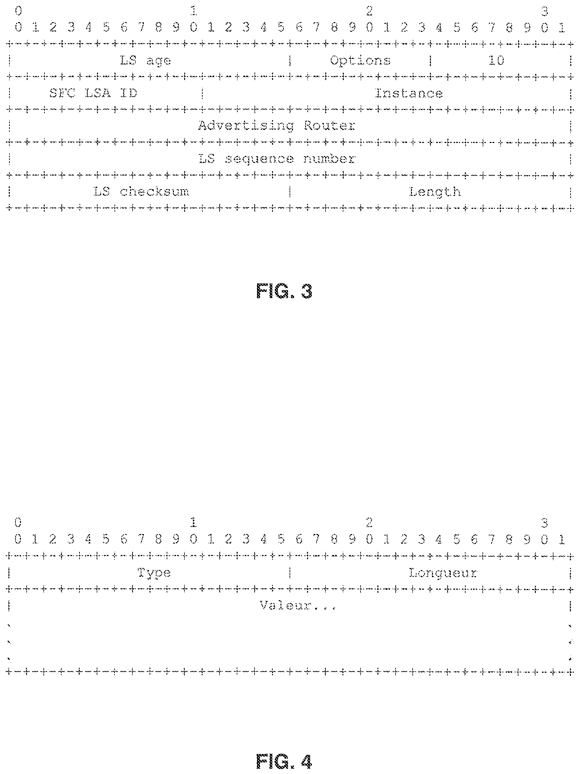

L'en-tête de la SFC LSA est conforme à l'en-tête standard d'un paquet LSA (cf. RFC 2328), tel qu'illustré sur la **figure 3****.**

Le contenu de la SFC LSA peut être constitué de plusieurs triplets TLV, qui vont refléter l'ensemble des fonctions SF connues du routeur OSPF qui en fait l'annonce. L'en-tête TLV est illustré sur la **figure 4****.**

L'encodage est aligné sur 32 bits. Les TLV successifs sont également alignés sur 32 bits. La SFC LSA contient un seul TLV de niveau supérieur (« *top-level »* en anglais) (cf. RFC 5250), qui indique la nature du contenu de la SFC LSA, soit l'ensemble des capacités fonctionnelles du routeur OSPF qui génère la SFC LSA. Ce TLV de niveau supérieur est défini de la façon suivante : 1 - Service Function (SF).

Le TLV SF décrit donc l'ensemble des fonctions SF associées à un routeur ayant émis une SFC LSA. Ces fonctions SF sont décrites dans une succession de sous-TLV (« *sub-TLV* » en anglais).

L'encodage des informations descriptives des fonctions SF peut être réalisé de différentes façons, selon des considérations de mise en œuvre, et de souplesse dans la capacité à décrire de nouvelles fonctions SF. Deux exemples d'encodage des sous-TLV sont fournis dans les Tables 1 et 2 ci-jointes, dans lesquelles la valeur du type de chaque sous-TLV se réfère à une, et une seule, fonction SF élémentaire.

D'autres sous-TLV peuvent naturellement être définis en fonction de la richesse fonctionnelle des équipements réseau, voire de la nature des services réseau.

On notera pour terminer que l'Invention peut être mise en œuvre au sein de nœuds PDP ou de nœuds SF de réseaux IP au moyen de composants logiciels et/ou matériels.

Les composants logiciels pourront être intégrés à un programme d'ordinateur classique de gestion d'un nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de découverte dynamique de fonctions service selon l'invention.

En effet, l'invention vise aussi un programme d'ordinateur téléchargeable depuis un réseau de communication comprenant des instructions pour l'exécution des étapes d'un procédé de découverte dynamique de fonctions service selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique tel qu'un disque dur, ou encore une clé USB (« *USB flash drive »* en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de découverte dynamique de fonctions service selon l'invention.

**Table 1**

| Type du sous-TLV | Nom du sous-TLV | Description |
|---|---|---|
| 1 | Service_Function_Identifier | Le contenu du champ Valeur de ce sous-TLV peut se résumer à un caractère numérique ou une chaîne de caractères identifiant de manière univoque une fonction SF. La valeur de ce champ peut varier d'un domaine à l'autre pour une même fonction, et est donc caractéristique des schémas d'identification utilisés par l'entité responsable de la gestion du domaine de chaînage de fonctions service. Un dispositif PDP peut être éventuellement signalé comme fonction SF. |
| 2 | Service_Function_Locator | Ce sous-TLV décrit l'adresse IPv4 ou l'adresse IPv6 utilisée pour localiser une fonction SF dans le réseau OSPF. Ce sous-TLV peut être présent plusieurs fois (par exemple, SF dual-stack). |
| 3 | Service_Function_Description | Ce sous-TLV décrit sommairement la fonction SF selon une chaîne de caractères contenue dans le champ « valeur », par exemple : « Fonction NAT64 hébergée par le routeur X », où X est l'information contenue dans le champ « *Advertising Router»* de l'en-tête de la SFC LSA. |
| 4 | Service_Function_Reboot_Timer | Ce sous-TLV décrit la valeur du *timer* associé à la réactivation d'une fonction SF. Ce *timer* indique qu'une opération de redémarrage est prévue pour cette fonction. La fonction SF sera disponible immédiatement après le redémarrage. |
| 8 | Service_Function_Diagnosis | Ce sous-TLV indique si la fonction SF est compatible avec un mécanisme de diagnostic. |

**Table 2**

| Type du sous-TLV | Nom du sous-TLV | Description |
|---|---|---|
| 1 | QoS Traffic Marking and Classification Service Function | Ce sous-TLV décrit la nature de la fonction de marquage et de classification de trafic, et intègre notamment les valeurs de *« per-hop behaviors* » (PHB) tels que « Best Effort », « Assured Forwarding » (AF) ou « Expedited Forwarding » (EF). |
| 2 | QoS Traffic Conditioning Service Function | Ce sous-TLV décrit la nature de la fonction de conditionnement de trafic, et intègre notamment pour valeur le support d'un algorithme de saut à jetons (« *token bucket* » en anglais). |
| 3 | QoS Traffic Scheduling Service Function | Ce sous-TLV décrit la nature de la fonction d'ordonnancement et intègre notamment pour valeurs le support des algorithmes WFQ (« *Weighted Fair Queueing* »), PQ (« *Priority Queueing* »), et CBQ (« *Class-Based Queueing* »)*.* |
| 4 | Network Address Translation Service Function | Ce sous-TLV décrit la nature de la fonction NAT compatible. Il peut prendre pour valeurs NAT44, NAT64 et DS-Lite. |
| 5 | Security Service Function | Ce sous-TLV décrit la nature de la fonction de sécurité compatible. Il a notamment pour valeurs le support d'une suite de protocoles IPsec (support de l'AH (« *Authentication Header* »), et de l'ESP (« *Encrypted Security Payload*»)), ainsi que le support d'une fonction pare-feu (par exemple, listes de contrôle d'accès, filtres de trafic, ou contrôle parental). |
| 6 | Deep Packet Inspection (DPI) Service Function | Ce sous-TLV indique le support d'une fonction DPI. |

## Revendications

1. Procédé de découverte dynamique de fonctions de service dans un réseau IP, lesdites fonctions de service permettant une mise en œuvre de traitements différenciés des flux de trafic acheminés dans le réseau IP en fonction de leur nature, ledit réseau IP comprenant au moins un nœud, dit nœud PDP, responsable de la prise de décisions relatives à la structuration d'un service reposant sur un ensemble de fonctions de service, dites fonctions SF, et de la notification de ces décisions à d'autres nœuds dudit réseau IP, et au moins un nœud, dit nœud SF, associé à au moins une fonction SF hébergée sur ledit nœud SF ou accessible *via* ledit nœud SF, ledit procédé comprenant les étapes suivantes :
- le nœud PDP reçoit un message d'annonce envoyé par le nœud SF, ledit message d'annonce indiquant au moins un identifiant ainsi que la localisation de ladite fonction SF associée à ce nœud SF, et
- le nœud PDP met à jour une liste de fonctions SF sur la base d'informations tirées dudit message d'annonce.

2. Procédé de découverte selon la revendication 1, **caractérisé en ce que** ledit nœud PDP envoie audit nœud SF, postérieurement à ladite étape de réception d'un message d'annonce par le nœud PDP, un message destiné à mettre en place de nouvelles règles relatives au traitement d'un trafic particulier par la, ou les fonction(s) SF associées à ce nœud, et/ou à requérir des informations supplémentaires de la part du nœud SF.

3. Procédé de découverte selon la revendication 1 ou la revendication 2, **caractérisé en ce que** ledit message d'annonce est envoyé par ledit nœud SF en réponse à un message de déclaration envoyé par le nœud PDP et indiquant que le nœud PDP agit en tant que tel.

4. Procédé de découverte selon la revendication 3, **caractérisé en ce que**, postérieurement à la réception par ledit nœud SF dudit message de déclaration, le nœud SF envoie audit nœud PDP un message destiné à fournir au nœud PDP des informations supplémentaires ou à lui demander des instructions.

5. Procédé de découverte selon la revendication 1 ou la revendication 2, **caractérisé en ce que**, suite à ladite étape de réception d'un message d'annonce, ledit nœud PDP envoie audit nœud SF un message de déclaration indiquant que le nœud PDP agit en tant que tel.

6. Procédé de découverte selon l'une quelconque des revendications 3 à 5, **caractérisé en ce que**, suite à la réception dudit message de déclaration, ledit nœud SF enregistre la localisation du nœud PDP ayant émis ce message de déclaration.

7. Nœud d'un réseau IP mettant en œuvre au moyen de fonctions de service des traitements différenciés des flux de trafic acheminés dans le réseau IP en fonction de leur nature, ledit nœud dit nœud PDP étant responsable de la prise de décisions relatives à la structuration d'un service reposant sur un ensemble de fonctions de service, dites fonctions SF, et de la notification de ces décisions à d'autres nœuds dudit réseau IP, ledit nœud possède des moyens pour :
- recevoir un message d'annonce envoyé par un nœud dudit réseau IP, dit nœud SF, associé à au moins une fonction SF hébergée sur ledit nœud SF ou accessible *via* ledit nœud SF, ledit message d'annonce indiquant au moins un identifiant ainsi que la localisation de ladite fonction SF associée audit nœud SF, et
- mettre à jour une liste de fonctions SF sur la base d'informations tirées dudit message d'annonce.

8. Nœud d'un réseau IP mettant en œuvre au moyen de fonctions de service des traitements différenciés des flux de trafic acheminés dans le réseau IP en fonction de leur nature, ledit nœud dit nœud SF étant associé à au moins une fonction de service, dite fonction SF, hébergée sur ledit nœud SF ou accessible *via* ledit nœud SF, ledit nœud possède des moyens pour :
- recevoir un message de déclaration envoyé par un nœud dudit réseau IP, dit nœud PDP, responsable de la prise de décisions relatives à la structuration d'un service reposant sur un ensemble de fonctions SF, et de la notification de ces décisions à d'autres nœuds du réseau IP, ledit message de déclaration indiquant que ledit nœud PDP agit en tant que tel,
- enregistrer la localisation dudit nœud PDP, et
- envoyer en réponse au nœud PDP un message d'annonce indiquant au moins un identifiant ainsi que la localisation de ladite fonction SF associée au nœud SF.

9. Nœud d'un réseau IP, mettant en œuvre au moyen de fonctions de service des traitements différenciés des flux de trafic acheminés dans le réseau IP en fonction de leur nature, ledit nœud dit nœud SF étant associé à au moins une fonction de service, dite fonction SF, hébergée sur ledit nœud SF ou accessible *via* ledit nœud SF, ledit nœud possède des moyens pour :
- envoyer un message d'annonce indiquant au moins un identifiant ainsi que la localisation de ladite fonction SF associée au nœud SF,
- recevoir en réponse de la part d'un nœud dudit réseau IP, dit nœud PDP, responsable de la prise de décisions relatives à la structuration d'un service reposant sur un ensemble de fonctions SF, et de la notification de ces décisions à d'autres nœuds du réseau IP, un message de déclaration indiquant que le nœud PDP agit en tant que tel, et
- enregistrer la localisation dudit nœud PDP.

10. Système de découverte dynamique de fonctions de service dans un réseau IP mettant en œuvre au moyen desdites fonctions de service des traitements différenciés des flux de trafic acheminés dans le réseau IP en fonction de leur nature, ledit système de découverte étant **caractérisé en ce qu'**il comprend au moins un nœud PDP selon la revendication 7, et au moins un nœud SF selon la revendication 8 ou la revendication 9.

11. Moyen de stockage de données inamovible, ou partiellement ou totalement amovible, comportant des instructions de code de programme informatique pour l'exécution des étapes d'un procédé de découverte dynamique de fonctions service selon l'une quelconque des revendications 1 à 6.

12. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de découverte dynamique de fonctions service selon l'une quelconque des revendications 1 à 6, lorsqu'il est exécuté sur un ordinateur.

13. Système selon la revendication 10, **caractérisé en ce que** le réseau IP met en œuvre le protocole de routage OSPF, << Open Shortest Path First>>.

14. Système selon la revendication 10, **caractérisé en ce que** le réseau IP met en œuvre le protocole de routage IS-IS, <<Intermediate System to Intermediate System>>.

15. Système selon la revendication 10, **caractérisé en ce que** le réseau IP met en œuvre le protocole de routage BGP, <<Border Gateway Protocol >>.

## Patentansprüche

1. Verfahren zur dynamischen Erkennung von Dienstfunktionen in einem IP-Netz, wobei die Dienstfunktionen eine Durchführung von differenzierten Behandlungen der in dem IP-Netz transportierten Verkehrsströme in Abhängigkeit von deren Natur ermöglichen, wobei das IP-Netz wenigstens einen Knoten umfasst, PDP-Knoten genannt, der für das Treffen von Entscheidungen in Bezug auf die Strukturierung eines Dienstes, der auf einer Gesamtheit von Dienstfunktionen, SF-Funktionen genannt, beruht, und für die Benachrichtigung anderer Knoten des IP-Netzes von diesen Entscheidungen verantwortlich ist, und wenigstens einen Knoten, SF-Knoten genannt, der wenigstens einer SF-Funktion zugeordnet ist, die auf dem SF-Knoten gehostet wird oder über den SF-Knoten zugreifbar ist, wobei das Verfahren die folgenden Schritte umfasst:
- Der PDP-Knoten empfängt eine Ankündigungsnachricht, die von dem SF-Knoten gesendet wurde, wobei die Ankündigungsnachricht wenigstens eine Kennung sowie den Ort der diesem SF-Koten zugeordneten SF-Funktion angibt, und
- der PDP-Knoten aktualisiert eine Liste von SF-Funktionen auf der Basis von aus der Ankündigungsnachricht entnommenen Informationen.

2. Verfahren zur Erkennung nach Anspruch 1, **dadurch gekennzeichnet, dass** der PDP-Knoten an den SF-Knoten, nach dem Schritt des Empfangs einer Ankündigungsnachricht durch den PDP-Knoten, eine Nachricht sendet, die dazu bestimmt ist, neue Regeln in Bezug auf die Behandlung eines bestimmten Verkehrs durch die SF-Funktion(en), die diesem Knoten zugeordnet ist (sind), aufzustellen und/oder zusätzliche Informationen von dem SF-Knoten zu erlangen.

3. Verfahren zur Erkennung nach Anspruch 1 oder Anspruch 2, **dadurch gekennzeichnet, dass** die Ankündigungsnachricht von dem SF-Knoten in Reaktion auf eine Erklärungsnachricht gesendet wird, die von dem PDP-Knoten gesendet wurde und angibt, dass der PDP-Knoten als ein solcher agiert.

4. Verfahren zur Erkennung nach Anspruch 3, **dadurch gekennzeichnet, dass** nach dem Empfang der Erklärungsnachricht durch den SF-Knoten der SF-Knoten an den PDP-Knoten eine Nachricht sendet, die dazu bestimmt ist, dem PDP-Knoten zusätzliche Informationen zu liefern oder von ihm Anweisungen anzufordern.

5. Verfahren zur Erkennung nach Anspruch 1 oder Anspruch 2, **dadurch gekennzeichnet, dass** im Anschluss an den Schritt des Empfangs einer Ankündigungsnachricht der PDP-Knoten an den SF-Knoten eine Erklärungsnachricht sendet, die angibt, dass der PDP-Knoten als ein solcher agiert.

6. Verfahren zur Erkennung nach einem der Ansprüche 3 bis 5, **dadurch gekennzeichnet, dass** im Anschluss an den Empfang der Erklärungsnachricht der SF-Knoten den Ort des PDP-Knotens registriert, der diese Erklärungsnachricht gesendet hat.

7. Knoten eines IP-Netzes, das mithilfe von Dienstfunktionen differenzierte Behandlungen der in dem IP-Netz transportierten Verkehrsströme in Abhängigkeit von deren Natur durchführt, wobei der Knoten, PDP-Knoten genannt, für das Treffen von Entscheidungen in Bezug auf die Strukturierung eines Dienstes, der auf einer Gesamtheit von Dienstfunktionen, SF-Funktionen genannt, beruht, und für die Benachrichtigung anderer Knoten des IP-Netzes von diesen Entscheidungen verantwortlich ist, wobei der Knoten Mittel besitzt zum:
- Empfangen einer Ankündigungsnachricht, die von einem Knoten des IP-Netzes, SF-Knoten genannt, gesendet wurde, der wenigstens einer SF-Funktion zugeordnet ist, die auf dem SF-Knoten gehostet wird oder über den SF-Knoten zugreifbar ist, wobei die Ankündigungsnachricht wenigstens eine Kennung sowie den Ort der dem SF-Koten zugeordneten SF-Funktion angibt, und
- Aktualisieren einer Liste von SF-Funktionen auf der Basis von aus der Ankündigungsnachricht entnommenen Informationen.

8. Knoten eines IP-Netzes, das mithilfe von Dienstfunktionen differenzierte Behandlungen der in dem IP-Netz transportierten Verkehrsströme in Abhängigkeit von deren Natur durchführt, wobei der Knoten, SF-Knoten genannt, wenigstens einer Dienstfunktion, SF-Funktion genannt, zugeordnet ist, die auf dem SF-Knoten gehostet wird oder über den SF-Knoten zugreifbar ist, wobei der Knoten Mittel besitzt zum:
- Empfangen einer Erklärungsnachricht, die von einem Knoten des IP-Netzes, PDP-Knoten genannt, gesendet wurde, der für das Treffen von Entscheidungen in Bezug auf die Strukturierung eines Dienstes, der auf einer Gesamtheit von SF-Funktionen beruht, und für die Benachrichtigung anderer Knoten des IP-Netzes von diesen Entscheidungen verantwortlich ist, wobei die Erklärungsnachricht angibt, dass der PDP-Knoten als ein solcher agiert,
- Registrieren des Ortes des PDP-Knotens, und
- Senden, als Antwort an den PDP-Knoten, einer Ankündigungsnachricht, die wenigstens eine Kennung sowie den Ort der dem SF-Koten zugeordneten SF-Funktion angibt.

9. Knoten eines IP-Netzes, das mithilfe von Dienstfunktionen differenzierte Behandlungen der in dem IP-Netz transportierten Verkehrsströme in Abhängigkeit von deren Natur durchführt, wobei der Knoten, SF-Knoten genannt, wenigstens einer Dienstfunktion, SF-Funktion genannt, zugeordnet ist, die auf dem SF-Knoten gehostet wird oder über den SF-Knoten zugreifbar ist, wobei der Knoten Mittel besitzt zum:
- Senden einer Ankündigungsnachricht, die wenigstens eine Kennung sowie den Ort der dem SF-Koten zugeordneten SF-Funktion angibt,
- Empfangen, als Antwort von einem Knoten des IP-Netzes, PDP-Knoten genannt, der für das Treffen von Entscheidungen in Bezug auf die Strukturierung eines Dienstes, der auf einer Gesamtheit von SF-Funktionen beruht, und für die Benachrichtigung anderer Knoten des IP-Netzes von diesen Entscheidungen verantwortlich ist, einer Erklärungsnachricht, die angibt, dass der PDP-Knoten als ein solcher agiert, und
- Registrieren des Ortes des PDP-Knotens.

10. System zur dynamischen Erkennung von Dienstfunktionen in einem IP-Netz, das mittels der Dienstfunktionen differenzierten Behandlungen der in dem IP-Netz transportierten Verkehrsströme in Abhängigkeit von deren Natur durchführt, wobei das System zur Erkennung **dadurch gekennzeichnet ist, dass** es wenigstens einen PDP-Knoten nach Anspruch 7 und wenigstens einen SF-Knoten nach Anspruch 8 oder Anspruch 9 umfasst.

11. Nicht wechselbares oder teilweise oder vollständig wechselbares Datenspeichermittel, welches Computerprogrammcodeanweisungen zur Ausführung der Schritte eines Verfahrens zur dynamischen Erkennung von Dienstfunktionen nach einem der Ansprüche 1 bis 6 aufweist.

12. Computerprogramm, welches aus einem Kommunikationsnetz herunterladbar und/oder auf einem computerlesbaren Medium gespeichert und/oder von einem Mikroprozessor ausführbar ist, **dadurch gekennzeichnet, dass** es Anweisungen zur Ausführung der Schritte eines Verfahrens zur dynamischen Erkennung von Dienstfunktionen nach einem der Ansprüche 1 bis 6, wenn es auf einem Computer ausgeführt wird, umfasst.

13. System nach Anspruch 10, **dadurch gekennzeichnet, dass** das IP-Netz das Routing-Protokoll OSPF, Open Shortest Path First, verwendet.

14. System nach Anspruch 10, **dadurch gekennzeichnet, dass** das IP-Netz das Routing-Protokoll IS-IS, Intermediate System to Intermediate System, verwendet.

15. System nach Anspruch 10, **dadurch gekennzeichnet, dass** das IP-Netz das Routing-Protokoll BGP, Border Gateway Protocol, verwendet.

## Claims

1. Method for dynamically discovering service functions in an IP network, said service functions allowing differentiated treatments of traffic flows routed through the IP network according to their nature, said IP network comprising at least one node, referred to as a PDP node, responsible for taking decisions as to the structuring of a service based on a set of service functions, referred to as SF functions, and for notifying other nodes of said IP network of these decisions, and at least one node, referred to as an SF node, associated with at least one SF function hosted on said SF node or accessible via said SF node, said method comprising the following steps:
- the PDP node receives an announcement message sent by the SF node, said announcement message indicating at least one identifier and the location of said SF function associated with this SF node, and
- the PDP node updates a list of SF functions on the basis of information taken from said announcement message.

2. Discovery method according to Claim 1, **characterized in that** said PDP node sends a message to said SF node after said step of the PDP node receiving an announcement message, which sent message is for putting new rules in place relating to the treatment of a particular kind of traffic by the SF function or functions associated with the node, and/or for requesting additional information from the SF node.

3. Discovery method according to Claim 1 or Claim 2, **characterized in that** said announcement message is sent by said SF node in response to a declaration message sent by the PDP node and indicating that the PDP node is acting as such.

4. Discovery method according to Claim 3, **characterized in that** the SF node sends a message to said PDP node after said SF node has received said declaration message, which sent message is for providing the PDP node with additional information or for requesting instructions therefrom.

5. Discovery method according to Claim 1 or Claim 2, **characterized in that** said PDP node sends a declaration message to said SF node after said step of receiving an announcement message, which declaration message indicates that the PDP node is acting as such.

6. Discovery method according to any one of Claims 3 to 5, **characterized in that**, after receiving said declaration message, said SF node stores the location of the PDP node that sent this declaration message.

7. Node of an IP network implementing, by means of service functions, differentiated treatments of traffic flows routed through the IP network according to their nature, said node, referred to as a PDP node, being responsible for taking decisions as to the structuring of a service based on a set of service functions, referred to as SF functions, and for notifying other nodes of said IP network of these decisions, said node having means for:
- receiving an announcement message sent by a node of said IP network, referred to as an SF node, associated with at least one SF function hosted on said SF node or accessible via said SF node, said announcement message indicating at least one identifier and the location of said SF function associated with said SF node, and
- updating a list of SF functions on the basis of information taken from said announcement message.

8. Node of an IP network implementing, by means of service functions, differentiated treatments of traffic flows routed through the IP network according to their nature, said node, referred to as an SF node, being associated with at least one service function, referred to as an SF function, hosted on said SF node or accessible via said SF node, said node having means for:
- receiving a declaration message sent by a node of said IP network, referred to as a PDP node, responsible for taking decisions as to the structuring of a service based on a set of SF functions, and for notifying other nodes of the IP network of these decisions, said declaration message indicating that said PDP node is acting as such,
- storing the location of said PDP node, and
- sending an announcement message to the PDP node in response, said announcement message indicating at least one identifier and the location of said SF function associated with the SF node.

9. Node of an IP network implementing, by means of service functions, differentiated treatments of traffic flows routed through the IP network according to their nature, said node, referred to as an SF node, being associated with at least one service function, referred to as an SF function, hosted on said SF node or accessible via said SF node, said node having means for:
- sending an announcement message indicating at least one identifier and the location of said SF function associated with the SF node,
- in response, receiving a declaration message from a node of said IP network, referred to as a PDP node, responsible for taking decisions as to the structuring of a service based on a set of SF functions, and for notifying other nodes of the IP network of these decisions, said declaration message indicating that the PDP node is acting as such, and
- storing the location of said PDP node.

10. System for dynamically discovering service functions in an IP network, implementing, by means of said service functions, differentiated treatments of traffic flows routed through the IP network according to their nature, said discovery system being **characterized in that** it comprises at least one PDP node according to Claim 7 and at least one SF node according to Claim 8 or Claim 9.

11. Irremovable, or partially or completely removable, data storage means including computer program code instructions for executing the steps of a method for dynamically discovering service functions according to any one of Claims 1 to 6.

12. Computer program that is downloadable from a communication network and/or stored on a medium that is readable by computer and/or executable by a microprocessor, **characterized in that** it comprises instructions for executing the steps of a method for dynamically discovering service functions according to any one of Claims 1 to 6, when it is executed on a computer.

13. System according to Claim 10, **characterized in that** the IP network implements the OSPF, Open Shortest Path First, routing protocol.

14. System according to Claim 10, **characterized in that** the IP network implements the IS-IS, Intermediate System to Intermediate System, routing protocol.

15. System according to Claim 10, **characterized in that** the IP network implements the BGP, Border Gateway Protocol, routing protocol.
